# EUROPEAN PATENT APPLICATION

(11) **EP 3 522 038 A1**
(43) Date of publication of application: **07.08.2019**
(21) Application number: 16917782.1
(22) Date of filing: 28.09.2016
(51) Int. Cl.: G06F 17/28, G06K 9/32

(54) **METHOD FOR TRANSLATING CHARACTERS AND APPARATUS THEREFOR**

(71) Applicant: Systran International Co. Ltd., Seoul 06775 (KR)
(72) Inventor: JI, Chang Jin, Seoul 06994 (KR); CHO, Chang Su, Guri-si Gyeonggi-do 11919 (KR)
(74) Representative: Heyerhoff Geiger & Partner Patentanwälte PartGmbB
(86) International application number: PCT/KR2016/010831
(87) International publication number: WO 2018/062580

(57) **Abstract**

A character translation method performed by a character translation apparatus according to one embodiment of the present invention may comprise the steps of: obtaining image contents; recognizing characters of a first language on the image contents and a sentence determination symbol of the first language; extracting a sentence of the first language composed of the recognized characters, on the basis of the recognized sentence determination symbol; producing, on the basis of the extracted sentence of the first language, a sentence to be translated using user event information; and translating the generated sentence to be translated into a second language and displaying the sentence translated into the second language.

## Description

### [Technical Field]

The present invention relates to a character translation method and an apparatus for the same, more particularly, a translation method capable of recognizing characters input in an image form and providing translation of the input characters in units of sentences, as well as a character translation device for the same.

### [Background Art]

With regard to recognizing characters on images or digital documents, an optical character recognition (hereinafter, OCR) technique has been widely used.

According to the OCR technique, character recognition is performed by comparing characters and OCR program-readable symbols with those stored beforehand in the program. That is, in the OCR technique, a subject to be considered for character recognition is a shape of individual letters (characters) only, and words and phrases composed of the characters are not considered.

With respect to the characters recognized by the OCR technique, in a case where machine translation into another language is performed according to a translation program, the translation program executes only simple translation with respect to a character recognition result of the OCR program, hence causing deterioration in translation accuracy. For instance, if a phrase (or a sentence) consisting of the characters recognized by OCR is divided into multiple rows and input, the translation program executes translation at each input row unit regardless of sentence unit, hence not achieving translation of a single sentence.

Nevertheless, a method of determining a translation unit of the characters recognized through OCR in terms of sentence (that is, sentence unit') is not yet provided.

Further, a method for improvement in reliability of a subject to be translated by reflecting user event information in the character recognition result from the OCR program has yet to be proposed.

### [Disclosure]

### [Technical Challenge]

The present invention has been proposed to solve above the mentioned challenges, and an object of the present invention is to provide a translation method which includes recognizing characters in input image content and then translating the recognized characters in a sentence unit, as well as a translation device for the same.

More particularly, an object of the present invention is to provide a translation method which includes: identifying a sentence consisting of characters recognized by an OCR program; and providing translation service based on the identified sentence.

Further, another object of the present invention is to provide a method of providing a graphical user interface (hereinafter, GUI) to indicate a subject to be translated and a translation result, as well as a device for the same.

Another object of the present invention is to provide a method for determining a personalized translation unit depending upon types of input image content, as well as a device for the same.

Another object of the present invention is to provide a method for correcting a subject to be translated or a translation result based on user event information, as well as a device for the same.

Objects of the present invention are not particularly limited to the above objects, and still other technical tasks not mentioned herein will be clearly understood from the following description by those skilled in the art.

### [Technical Solution]

In order to accomplish the above objects, according to one embodiment of the present invention in regard to a character translation method through a character translation device, the character translation method may include: acquiring image content; recognizing characters in a first language and sentence determining symbols in the first language in the image content; extracting a sentence in the first language, which consists of the recognized characters, based on the recognized sentence determining symbols; generating a subject text to be translated ('translation target text') using user event information, based on the extracted sentence in the first language; translating the generated translation target text into a second language; and displaying the translated text in the second language. Further, in order to accomplish the above objects, according to one embodiment of the present invention in regard to a character translation device, the translation device may include a camera for acquiring input image content, an input unit for receiving input of user event information, a display unit for displaying a whole or part of the acquired image content, and a control unit with functions of: recognizing characters and sentence determining symbols in a first language in the image content; extracting a sentence in the first language, which consists of the recognized characters, based on the recognized sentence determining symbols; generating a translation target text using the user event information, based on the extracted sentence in the first language; and translating the generated translation target text into a second language, thereby displaying the translated text in the second language.

In order to accomplish the above objects, according to one embodiment of the present invention in regard to a computer program stored in a recording medium, the computer program may be used in conjunction with a computing device and execute the following steps including: recognizing characters and sentence determining symbols in a first language in image content; extracting a sentence in the first language, which consists of the recognized characters, based on the recognized sentence determining symbols; generating a translation target text using user event information, based on the extracted sentence in the first language; and translating the translation target text into a second language and then displaying the translated text in the second language.

### [Advantageous effects]

According to one embodiment of the present invention, the translation in sentence units is performed with respect to OCR processed characters, thereby achieving effects of providing the user with more accurate translation output. According to one embodiment of the present invention, a personalized translation unit may be determined depending upon types of input content and translation may be performed on the determined translation unit, thereby achieving effects of providing the user with more accurate translation output.

According to one embodiment of the present invention, the translation target or the translation output may be amended on the basis of the user event information, thereby achieving effects of providing the user with more accurate translation output.

Further, according to one embodiment of the present invention, the translation target text is displayed through a GUI, the user may achieve predictability of translation accuracy and a function of modifying the translation target.

### [Description of Drawings]

FIG. 1 illustrates an example of a character translation process according to one embodiment of the present invention.
FIG. 2 is a block diagram illustrating a character translation device according to another embodiment of the present invention.
FIG. 3a is a flowchart illustrating a character translation method according to another embodiment of the present invention.
FIG. 3b is a flowchart illustrating a context identification method according to another embodiment of the present invention.
FIG. 4 illustrates an example of image content referred to in some embodiments of the present invention.
FIG. 5 illustrates an example of translation target text referred to in some embodiments of the present invention.
FIGS. 6 and 7a are exemplary views for explaining a sentence extraction process referred to in some embodiments of the present invention.
FIGS. 7b is exemplary views for explaining data standards used in the sentence extraction process shown in FIG. 7a.
FIG. 8 illustrates a GUI referred to in some embodiments of the present invention.
FIG. 9 is an exemplary view for explaining how to modify the translation target text according to another embodiment of the present invention.
FIG. 10 illustrates output UI of the character translation device referred to in some embodiments of the present invention.
FIG. 11 illustrates the transliteration output UI of the character translation device referred to in some embodiments of the present invention.
FIG. 12 is an exemplary view for explaining a translation target text determination method by layout identification, referred to in some embodiments of the present invention.

### [Best Mode]

Hereinafter, with reference to the accompanying drawings, preferred embodiments of the present invention will be described in detail. Advantages and features of the present invention and technical solutions to accomplish the above advantages and features will be obviously understood with reference to the embodiments concretely described below as well as the accompanying drawings. However, the present invention is not particularly limited to the following embodiments and may be implemented in various different forms. The present embodiments are proposed only for completely describing the present invention and for sufficiently informing persons having ordinary knowledge and skills in the art, to which the present invention pertains ('those skilled in the art'), of the scope of the present invention. Therefore, the present invention is duly defined by the appended claims. The same reference numerals refer to the same components throughout the specification.

Unless otherwise defined herein, all terms (including technical and scientific terms) used in the present specification may have meanings commonly understood by those skilled in the art. Further, some terms with typical dictionary definition are not ideally or excessively interpreted unless otherwise clearly and specifically defined. The terms used in the present specifications are given for explaining the embodiments without particular limitation to the present invention. In the specification, singular expressions may also encompass a plural form unless context specifically indicates otherwise.

In the specification, the sentence determining symbol refers to a symbol capable of distinguishing a series of character groups from other characters and determining the distinguished character groups as a sentence, in a case where character strings or plural continuous characters are arranged. For instance, when a symbol such as a punctuation mark ".", "?", "!", ":", "/", etc. is present in the middle of plural listed characters, a group of characters in front of the above symbol as a boundary may be distinguished from a group of characters following the boundary. Further, such distinct groups of characters may form sentences. Herein, the symbols used for distinguishing the above character groups are defined as sentence determining symbols. On the other hand, the sentence determining symbols in the specification are not particularly limited to the above symbols, which are introduced for illustrative purpose only. For instance, in a case where a '(apostrophe) or "(quotation mark) is arranged in pairs, a character group in the apostrophe pair or the quotation mark pair is distinguished from other character groups outside the quotation marks. Therefore, these marks are included in the sentence determining symbols in the present invention.

On the other hand, sentences in the plural character groups are not necessarily distinguished by a sentence determining symbol only. For instance, when the plural character groups are distinguished at a boundary of a predetermined space such as an empty space (or blank), tab, line, etc., or spatially distinguished by varying a layout in which the character groups are included, the character groups existing in the front and rear of the boundary or the character groups in different layouts may be of different sentences. Further, when the predetermined space is repeated in a constant pattern within the plural character groups, this space may not be used to determine a sentence but be a blank for distinguishing words in the sentence.

Therefore, the sentence stated in the specification should be interpreted as a character group unit identified by the sentence determining symbol. Further, a character group unit distinguished by a predetermined space within plural character groups should also be understood as a sentence in accordance with one embodiment of the present invention. In other words, a sentence stated in the specification does not have to include a subject and a verb as essential components, instead, may be understood as a sentence in the specification even if it is a title, a theme, etc. having specific meanings. Therefore, paragraphs in the sentence and/or the character group including words with a particular subject should also be interpreted as a sentence in accordance with another embodiment of the present invention. In the present text, the user event information refers to all user information input to the character translation device according to one embodiment of the present invention. That is, when the character translation device according to one embodiment of the present invention receives input of information on the image content or a user enters specific position information, the user event information may include the input information.

In this case, the character translation device may receive the user event information in various ways. For instance, information input through different components such as an input unit, a camera, a sensor unit, etc. in the character translation device may be included.

Specifically, if activity of the user corresponds to a specific event, for example, when the user is in a particular restaurant or at the airport, the user event information may include position information input to the sensor unit of the character translation device. At this time, if the character translation device detects a variation in position information out of a critical range with reference to a preset time, for example, when an event that the user is traveling is detected, information on a change in position information may also be included in the user event information.

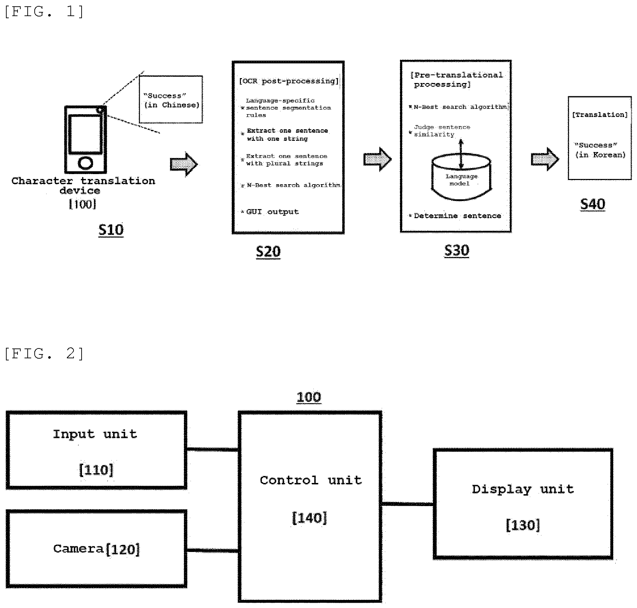

FIG. 1 illustrates a character translation process according to one embodiment of the present invention. Referring to FIG. 1, the character translation process is performed by the character translation device 100. In particular, this figure shows an example wherein a user photographs the image content S10 to recognize characters through the character translation device 100 and conducts machine translation of the recognized characters. The character translation device 100 may receive input of language selection information and/or user event information from the user before photographing the image content.

The image content acquired through photographing may include a group of characters ('character group') written by at least one language. The character translation device 100 may have a whole or part of the character group in the acquired image content, which is designated by the user as a character recognition range. In this regard, using OCR as a character recognition method is illustrated by way of example in FIG. 1. Hereinafter, it is assumed that the character recognition method represented herein is OCR as an example of conventional character recognition methods.

Next, the character translation device 100 performs OCR post-processing S20.

The character translation device 100 may learn different language-specific fonts using sentence segmentation rules predefined by language, and recognize the characters in input image content. For instance, the character translation device 100 may use sentence segmentation rules stipulated in Segmentation Rule eXchange format (SRX) - LISA.org.

Further, according to one embodiment of the present invention, the character translation device 100 may learn a variety of language-specific fonts to thus recognize sentence determining symbols within a character group. That is, in the OCR post-processing S20, the character translation device 100 may recognize characters and/or sentence determining symbols in the image content.

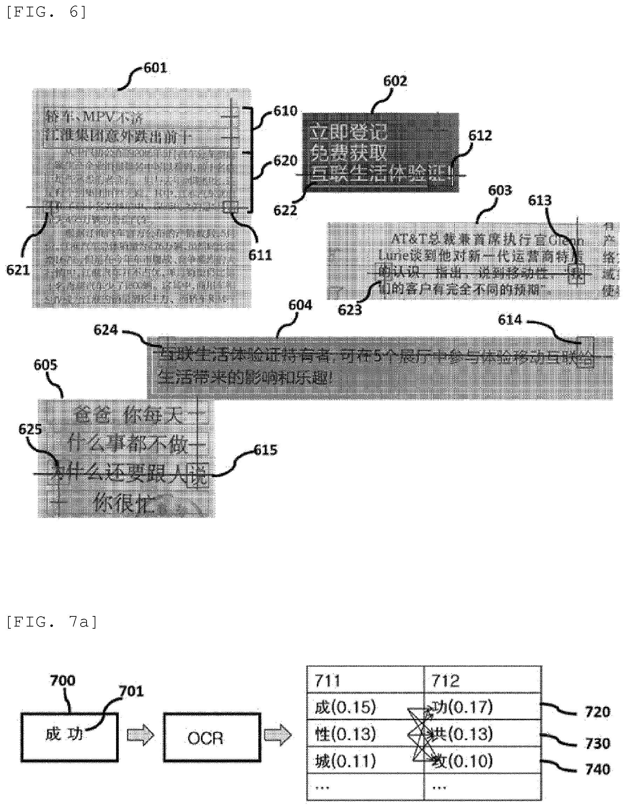

Further, the character translation device 100 may recognize a character string in the image content. Hereinafter, according to the embodiment in relation to a method for generation of a translation target text explained in FIG. 6, a character string or plural character strings may be extracted, respectively, in a sentence unit. Thus, a detailed description thereof will be given later in regard to the description of FIG. 6.

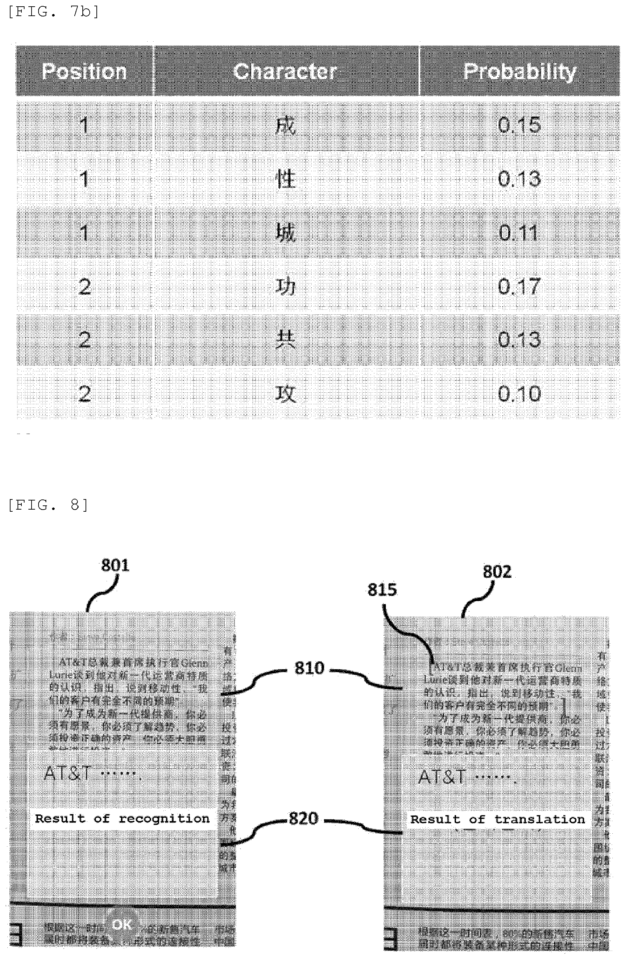

Further, the character translation device 100 may use a stochastic combination relationship between characters to thus improve accuracy in recognizing characters. For instance, the character translation device 100 may judge the stochastic combination relationship between the characters using the N-Best search algorithm. A detailed description thereof will be given later in regard to the description of FIG. 7.

Next, the character translation device 100 may execute pre-translational processing S30.

In the pre-translational processing, the character translation device 100 may check accuracy of a text using a preset language model for the text extracted in a sentence unit from the characters recognized by the character translation device 100. That is, in order to increase translation accuracy when the translation is conducted using the text consisting of the characters recognized by OCR, a translation target text must be absolutely correct.

Therefore, the pre-translational processing is a process of ensuring reliability of the translation target text before performing machine translation.

At this time, the character translation device 100 may finally determine a translation target text using the preset language model, on the basis of frequency of appearance on the Web, pre-learned character coupling relationship in each language model, etc. In other words, the characters obtained after OCR recognition during OCR post-processing S20 are extracted as a text in a sentence unit, the extracted text in a sentence unit is processed in the pre-translational processing S30 to finally determine the translation target text.

Finally, the character translation device 100 may perform machine translation S40 for the translation target text and output the translation result through the display.

FIG. 2 is a block diagram of the character translation device according to another embodiment of the present invention.

Hereinafter, referring to FIG. 2, a detailed description will be given of the structure and operation of the character translation device 100.

The character translation device 100 may include an input unit 110, a camera 120, a display unit 130 and a control unit 140.

The input unit 110 may receive a variety of data, commands and/or information from a user. In particular, the input unit 110 may receive information on user event information and/or image content, which is input to the character translation device 100 by the user. Further, the input unit 100 may receive input of user designation for a character recognition range, and input of modification to the translation target sentence.

The input unit 110 may include any input means well known in the art. For instance, the input unit 110 may be configured to include at least one of keypads, buttons and a touchscreen to receive user input. Further, the input unit 110 may include a microphone to receive a user's voice.

The camera 120 may acquire image content according to one embodiment of the present invention. The camera 120 may be configured to include any image sensor well known in the art. The character translation device 100 may include one or more cameras.

The display unit 130 may display various data, commands, information and/or GUIs to the user. The display unit 130 may include a whole or part of the image content acquired from the camera 120. Further, the display unit 130 may display a result of character recognition through OCR, an extracted sentence, a translation target text and/or a result of translation.

The display unit 130 of the present invention may further include any type of display means well known in the art. For instance, the display unit 130 may be configured in a touchscreen form having a touch sensor and, in this case, the display unit 130 may also function as an input unit 110. The control unit 140 may control overall operation of individual components in the character translation device 100. More particularly, the control unit 140 may include a central processing unit (CPU), a microprocessor unit (MPU), a microcontroller unit (MCU) or any other types of processers well known in the art. Further the control unit 140 may be configured to include a memory such as RAM. Further, the control unit 140 may store at least one application or program for executing the method according to one embodiment of the present invention. For instance, the control unit 140 may store a character translation program and execute the same according to one embodiment of the present invention. Since the control unit 140 executes the character translation program, the character translation process according to one embodiment of the present invention may be implemented.

More particularly, since the character translation process according to one embodiment of the present invention such as user input, character recognition, sentence extraction and/or translation is implemented, the control unit 140 may alter a display object on the display unit 130.

According to one embodiment of the present invention, the control unit 140 may store a plurality of lower modules to execute functions according to one embodiment of the present invention.

For instance, the control unit 140 may include a detection unit to identify the language of characters in the image content. In particular, the detection unit may identify one or more languages in the image content. Accordingly, the character translation device 100 may determine the language identified in one image as a first language which is a translation target. For instance, the first language may be plural such as Chinese and English. For instance, the control unit 140 may include a context determining member. The context determining member may use a language model for the language identified in the detection unit in order to judge whether a character group in a character string indicates a word or a sentence. In this case, the context determining member may execute detection of a blank within the character string and, according to a result of the detection, determine whether the character group indicates a word or a sentence.

Further, the context detection unit may judge whether the character group in the character string is a sentence in a single row or multiple rows.

For instance, the control unit 140 may include a conversion member. The conversion member may execute pre-translational processing of words or sentences judged in the context detection unit, generation of transliteration, and translation. The conversion member may determine a word or sentence to be included in the final translation target using the N-best search algorithm. In this case, using the N-best search algorithm may determine the word or sentence included in the translation target during OCR post-processing or pre-translational processing and the conversion member may generate character combination data for the above purpose. The character combination data may have a data structure in accordance with pre-defined protocols. A detailed description thereof will be given later in the description of FIG. 7b.

Further, the conversion member may determine a second language and execute automatic translation for the sentence determined from the first language into a second language. Further, for the determined translation target, the conversion member may also generate transliteration of the second language.

On the other hand, although not shown, the character translation device 100 may include a communication unit. The communication unit may support wired/wireless Internet communication or Intranet communication of the character translation device 100 and may transmit and receive various types of information with an external device. The communication unit may be provided with a language model and pre-defined sentence segmentation rules from the external device. Alternatively, in order to process such language model, OCR, the pre-defined sentence segmentation rules, etc. by the external device, the communication unit may transmit data related to the character recognition to the external device and may further receive a processed result from the external device. More particularly, the communication unit may transmit character combination data having a structure corresponding to a pre-defined protocol to an external device and further receive a processed result from the same. Further, the communication unit may receive image content, which is subjected to the character recognition according to one embodiment of the present invention, from an external device and may further function as an input unit 110 in the above embodiment. The communication unit may be configured to include at least one among a variety of communication modules well known in the art.

Further, although not shown, the character translation device 100 may include a storage unit. The storage unit may store various data, commands and/or information. The storage unit may store one or more applications in order to accept the character recognition method according to one embodiment of the present invention. In addition, the storage unit may store different kinds of information received through the communication unit and different kinds of information input through the input unit.

The storage unit may temporarily or non-temporarily (or steadily) store data transmitted from an external device. The storage unit may be configured to include ROM (Read Only Memory), EPROM (Erasable Programmable ROM), EEPROM (Electrically Erasable Programmable ROM), nonvolatile memory such as flash memory, a hard disk, a removable disk, or any computer-readable recording medium well known in the rat.

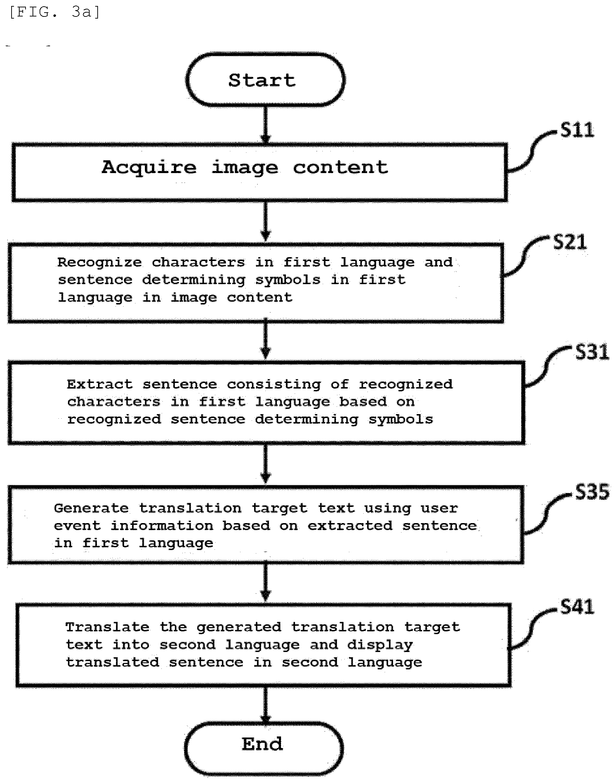

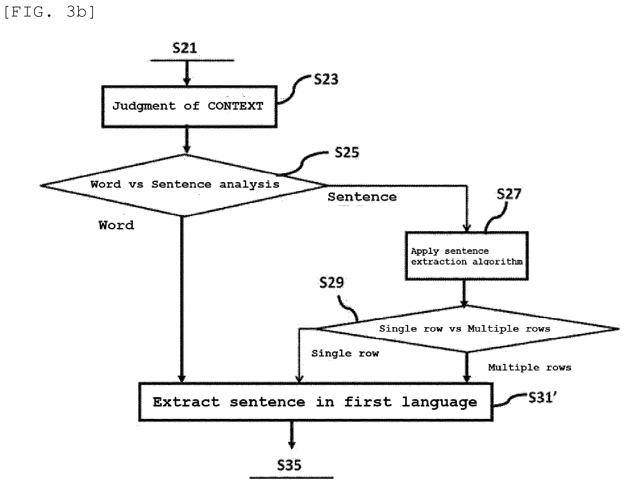

FIG. 3a is a flowchart illustrating a character translation method according to another embodiment of the present invention. FIG. 3b is a flowchart illustrating a context identification method according to another embodiment of the present invention.

Hereinafter, it is presumed that the character translation method is performed by the character translation device 100 wherein the control unit 140 executes a character translation program.

Referring to FIG. 3a, the character translation device 100 may acquire image content (S11). Herein, the image content is input through a camera or received via the communication unit, thus being acquired.

The character translation device 100 may recognize characters in a first language or sentence determining symbols in the first language in the image content (S21). For instance, the first language may be Chinese. In this case, the character translation device 100 may receive input of user event information including language selection information.

The character translation device 100 may be set up with the language selection information which is, for example, Chinese as the language for recognition target characters, from the user. Further, after recognition of the recognition target characters, the character translation device 100 may also receive input of other language set as a translation target.

The character translation device 100 may receive input of other information along with the language selection information set as the user event information. For instance, if the image content is a menu written in Chinese, the language selection information may be set to Chinese, while information indicating that the image type is a menu may be input as the user event information. In such case, the character translation device 100 may recognize the characters corresponding to the food menu using a stochastic combination relationship between the recognized characters, and then may more accurately execute sentence extraction and generation of a translation target text from the recognized characters.

The character translation device 100 may recognize characters in a first language, based on input language selection information, and sentence determining symbols in the first language according to pre-defined language-specific sentence segmentation rules. As seen in the above example, the character translation device 100 receives Chinese set as the recognition target character, therefore, may recognize Chinese characters in image content. Further, the character translation device 100 may recognize characters and sentence determining symbols by comparing the same with diverse learned Chinese fonts according to the pre-defined language-specific sentence segmentation rules. If the characters in the image content include un-learned Chinese fonts, the predefined sentence segmentation rules may be complemented by means of web search via the communication unit. More particularly, referring to FIG. 3b, the character translation device 100 may recognize a character string including the characters in the first language in the image content and judge a context of the character string including the characters in the first language (S23). That is, the character translation device 100 may judge whether the character string including the recognized characters in the first language is a word or a sentence and, if the character string is a sentence, whether the sentence is formed in a single row or multiple rows.

First, the character translation device 100 may judge whether a character string is a word or a sentence (S25). At this time, in a case where a blank between plural character groups included in the character string is equal to or greater than a predetermined width of area, the character translation device 100 may judge that the character groups separated by the blank are different words. If the blank is repeated with a pattern, the character translation device 100 may also judge the character groups separated by the blanks as different words. Herein, the word may have a typical dictionary definition, however, the embodiment of the present invention is not particularly limited thereto. That is, the word may include a paragraph in a text consisting of a word having dictionary definition and a postposition. In particular, the character group defined as a sentence such as theme, title, slogan, etc. in the present specification to thus become a single translation unit may also be included in the word as defined above.

When a character string is judged as a word, the character translation device 100 may extract the above character string as a sentence in a first language (S31').

On the other hand, if no blank equal to or greater than the predetermined width of area is identified or the blank is not repeated with a certain pattern, the character translation device 100 may judge that the character string is not a word but a sentence. When the character string is judged as a sentence, a preset sentence extraction algorithm may be applied to the character string (S27).

By executing the sentence extraction algorithm, the character translation device 100 may judge whether the text of the character string is a sentence in a single row or multiple rows (S29). Specific examples of the sentence extraction algorithm will be described later in the description of FIG. 6.

The character translation device 100 may detect the existence of a blank in the character string to judge the character string as a word or may identify a sentence in a single row or multiple rows through the sentence extraction algorithm, thereby extracting the sentence in a first language (S31').

In this regard, according to one embodiment of the present invention, in order to judge whether the sentence is formed in a single row or multiple rows, sentence determining symbols may be used. That is, the character translation device 100 may identify a sentence determining symbol and identify that the character groups located before and after the identified sentence determining symbol are different sentences from each other. Accordingly, when the character groups in a single linear distinguishable with reference to a sentence determining symbol, plural sentences may be present in the single line.

In this case, with regard to the character groups at the front and rear ends of the line, the character translation device 100 may judge that multiple rows are continuously connected in form of a single sentence until another sentence determining symbol appears at a top or bottom end of the line.

Based on the recognized sentence determining symbol, the character translation device 100 may extract a sentence in the first language, which consists of the recognized characters (S31). In other words, the character translation device 100 may identify a character group in a sentence unit with reference to sentence determining symbols. Therefore, the character translation device 100 may judge whether a character string consisting of the recognized characters forms a single sentence or corresponds to a partial configuration of the single sentence. According to such judgment, the character translation device 100 may extract one character string or a plurality of character strings as a single sentence. Further, the character translation device 100 may generate a translation target text using user event information, based on the extracted sentence in the first language (S35). In this case, the character translation device 100 may process the extracted sentence into the translation target text using a preset language model. The extracted sentence may be identical to the translation target text or be changed.

Finally, the character translation device 100 may translate the generated translation target text into a second language to thus display the translated text in the second language (S41) .

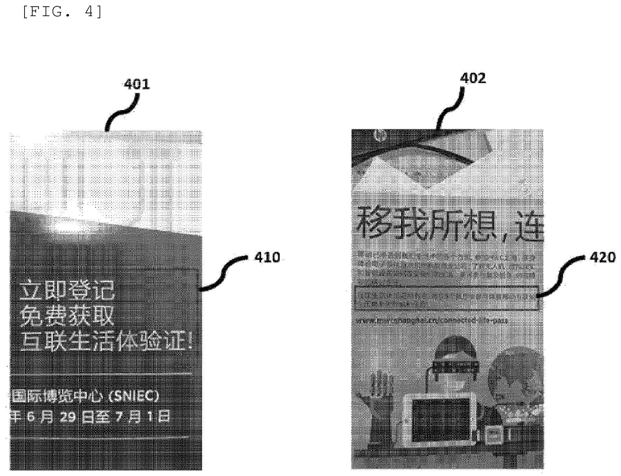

FIG. 4 illustrates the image content referred to in some embodiments of the present invention.

Referring to FIG. 4, the character translation device 100 may acquire content images via any one among the communication unit, input unit 110 or camera 120. Further, the character translation device 100 may output the content image acquired via the display unit 130. In FIG. 4, examples of the content images output through the display unit 130, that is, an image 401 and an image 402 are illustrated.

Referring to the image 401, a character group 410 as a recognition target of the character translation device 100 is shown. Each character string in the character group 410 corresponds to a single sentence unit. The character translation device 100 may recognize characters in the image 401 and, in particular, extract each character string in the character group 410 as a single sentence.

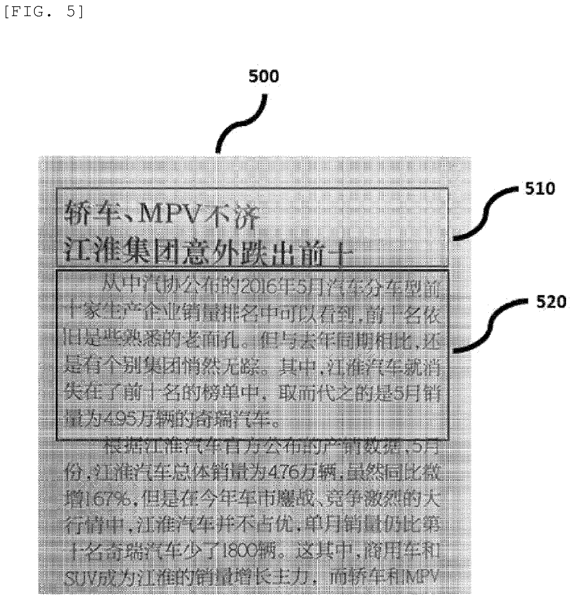

Referring to the image 402, a character group 420 as a recognition target of the character translation device 100 is shown. Each character string in the character group 420 does not correspond to a single sentence unit. That is, the character string in the character group 420 configures a part of a single sentence. In this case, the character translation device 100 may recognize characters in the image 402 and, in particular, extract plural character strings in the character group 420 as a single sentence. FIG. 5 illustrates the translation target text referred to in some embodiments of the present invention.

Referring to FIG. 5, the character translation device 100 may recognize characters in a first language in step (S21), and may recognize at least one among character strings in image content.

Further, the character translation device 100 may identify a size or thickness of characters in first and second character strings among the character strings recognized in step (S31). In other words, as shown in FIG. 5, if a character string in the character group 510 and another character string in the character group 520 are different from each other in terms of font size or thickness of characters, the character translation device 100 may identify such differences.

The character translation device 100 may extract a first character string as the sentence in the first language, based on the identified character size. That is, a character string belonging to the character group 510 shown in FIG. 5 is a title or an emphasis phrase expressing the subject of the image content 500, has a relatively large font size. The character translation device 100 may recognize the above phrase as a single sentence unit, thereby extracting the same as a sentence.

On the other hand, the character translation device 100 may recognize a character string belonging to the character group 520 having a relatively small font size wherein a single character string comprises a part of a sentence. In this case, the character translation device 100 may extract a plurality of character strings as a single sentence in accordance with the sentence extraction method explained in FIG. 6.

FIG. 5 illustrates a method of extracting a character string as a sentence wherein character strings having different font sizes are included in the image content, and the character translation device 100 extracts the character string based on the font size. However, the embodiments of the present invention are not particularly limited to the above. That is, the character translation device 100 may extract a single character string as a sentence or extract a plurality of character strings as a single sentence, depending upon the type of image content.

In step (S11), the character translation device 100 may receive input of user event information including information on types of image content from the user. For instance, when the image content is a signboard or a menu, one character string is generally a single sentence. Therefore, if this information is input, the character translation device 100 may extract the recognized character string as a sentence. At this time, the character translation device 100 does not need to execute an alternative algorithm for sentence extraction, thereby minimizing operation procedures for extracting sentences.

On the other hand, if the input image content is a type having a number of paragraphs such as newspapers or novels, it may be recognized that plural character strings are combined to configure a sentence. Accordingly, the character translation device 100 may extract a plurality of character strings as a single sentence and attempt to apply a preset language model. As a result, accuracy of a translation target text is increased to thus achieve accurate translation.

FIGS. 6 and 7a are exemplary views for explaining a sentence extraction process referred to in some embodiment of the present invention.

Referring to FIG. 6, the character translation device 100 may recognize characters in a first language and also at least one character string in image content in step (S21). FIG. 6 illustrates some examples that include the character string recognized by the character translation device 100. Hereinafter, for example, with regard to the image content 601, 602, 603, 604 and 605, a detailed description will be given of the sentence extraction algorithm according to some embodiments of the present invention.

In step (S31), the character translation device 100 may select one of the recognized character strings, wherein the character contained in the selected character string is one located at the right end among characters of the recognized character strings.

Herein, in case of the image content 601 and 602, the lowest character strings including characters 611 and 612 located at the right end, respectively, are selected. For the image content 603 and 605, the middle character strings including characters 613 and 615 located at the right end, respectively, that is, the character strings at third line are selected. In addition, in case of the image content 604, the uppermost character string including character 614 located at the right end is selected.

The character translation device 100 may execute first judgment as to whether there is any character in the upper character string than the selected character string, with reference to x-axis coordinates of the characters 611, 612, 613, 614 and 615 located at the right end.

Therefore, in case of the image contents 602, 604 and 605, the character translation device 100 may judge that there is no character in the upper character string than the selected character strings including the characters 612, 614 and 615. In this case, the character translation device 100 may extract the selected character strings as a sentence in a first language.

However, with regard to the image content 602, 604 and 605, one character string may be a single sentence in the image content 602 and 604. However, in case of the image content 604, two character strings are connected and, if extracting only one thereof as a sentence, sentence extraction error may be caused. In order to prevent such sentence extraction error, the character translation device 100 may execute second judgment about whether there is any character in the lower character string than the selected character string, with reference to the x-coordinates of the character located at the left end in the selected character string.

For instance, the character translation device 100 may judge whether there is any character in the lower character string with reference to x-axis coordinates of the characters 621, 622, 623, 624 and 625 located at the left end in the selected character string.

As a result of the judgment, in case of the image content 602 and 605, no character in the lower character string is present. However, the image content 604 includes a character in the lower character string.

Herein, similar to the results of the first judgment, in case of the image content 602 and 605, the character translation device 100 may extract the selected character string as a single sentence.

On the contrary, in case of the image content 604, the character translation device 100 may modify a result of the first judgment into a result of the second judgment and does not extract the selected character string as a single sentence. The character translation device 100 may extract a plurality of character strings including the selected character string and the lower character string as a single sentence.

On the other hand, in case of the image content 601 and 603, the character translation device 100 may judge that there is a character in the upper character string than the selected character string including the characters 611 and 613.

In this case, the character translation device 100 may extract a plurality of character strings including the selected character string and the upper character string than the selected character string as a sentence in the first language. That is, in case of the image content 601 and 603, the character translation device 100 may extract a sentence including a plurality of character strings.

According to one embodiment of the present invention, the aforementioned sentence extraction algorithm may be applied along with the sentence extraction method using font size identification and image content type information as illustrated in the description of FIG. 5. For instance, in case of the image content 601, the character translation device 100 may extract one character string as a single sentence since the character string in the region 610 has a relatively large font size, and may apply the sentence extraction algorithm to only the character string in the region 620 that has relatively smaller font size. Further, the character translation device 100 may receive input of the image content 601 in the type of newspaper articles and extract a plurality of character strings as a single sentence in the region 620, so as to apply the preset language model.

FIG. 7a illustrates an example that the character translation device 100 recognizes characters by OCR as a character recognition method in regard to the image content 700, and the recognized characters are subjected to execution of the N-best search algorithm.

A case wherein Chinese is set as the language selection information will be described by way of example. As a result of OCR processing, the character translation device 100 may recognize Chinese language, based on the language selection information, and may determine candidate characters 711 for a first character 701 among Chinese characters in the image content 700. Further, the character translation device 100 may determine candidate characters 712 for a second character adjacent to the first character 701 among the characters in the image content 700. The candidate characters 711 may include the first character 701, while the candidate characters 712 may include the second character 702.

The candidate characters 711 and 722, respectively, may be present in plural. Further, as a result of the N-Best search algorithm execution, the candidate characters 711 and the candidate characters 712 may have probability of being selected as the first character and the second character, respectively.

The character translation device 100 may generate at least one combination between the candidate characters 711 for the first character 701 and the candidate characters 712 for the second character 702.

The character translation device 100 may select the combination of characters 720 to be recognized as the first character and the second character with the highest probability among the generated combinations, based on the language selection information.

The character translation device 100 may recognize the Chinese character in the image content 700 on the basis of the selected character combination. FIG. 7b is an exemplary view for explaining a standard of data used in the sentence extraction process illustrated in FIG. 7a. In particular, FIG. 7b illustrates a structure of the character combination data according to one embodiment of the present invention. Referring to FIG. 7b, the character translation device 100 may generate character combination data, including: the candidate characters 711 and 712 shown in FIG. 7a; information on the candidate characters 711 and 712 if the candidate characters are combined; a location of each candidate character, that is, information about whether the candidate is the first character or the second character; and probability value information of the candidate characters 711 and 712. The character translation device 100 may recognize the characters using the character combination data with such a probability value as described above during OCR post-processing (S20), and may generate a translation target text using the character combination data during pre-translational processing (S30).

The data structure shown in FIG. 7b is given for illustrative purpose only and the embodiment of the present invention is not particularly limited thereto. The data structure may be modified according to various embodiments, and a typical data structure widely used in the art may also be applied.

In another embodiment of the present invention, the character translation device 100 may transmit the data shown in FIG. 7b to a server that performs pre-translational processing. In this case, a server group may use the received character combination data in order to determine the translation target text required to translate each character in the first language into a second language.

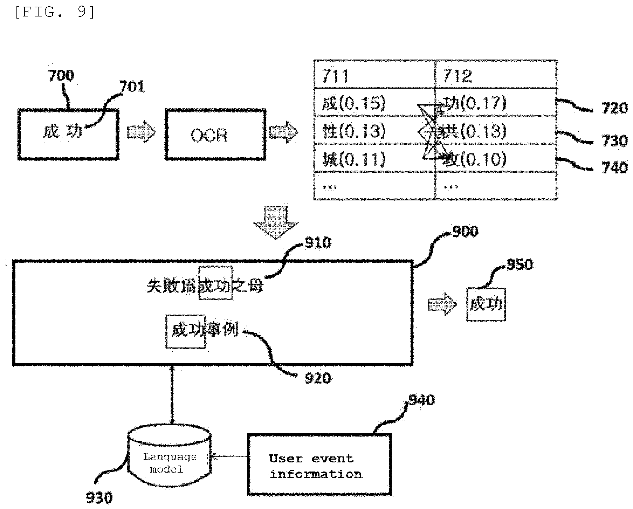

On the other hand, the character translation device 100 may generate a translation target sentence through the N-Best search algorithm illustrated in FIG. 7. A detailed description thereof will be given later in the description of FIG. 9.

FIG. 8 is an exemplary view of a GUI referred to in some embodiments of the present invention.

Referring to FIG. 8, in step (S11), the character translation device 100 may receive input of a translation target area among acquired images. Therefore, as shown in a screen 801, the character translation device 100 may display the translation target area in a first region 810 of the display unit 130.

In step (S21), the character translation device 100may also display the character in the first language and the sentence determining symbol in the first language in a second region 820 of the display unit 130, as shown in the screen 801.

In step (S41), as a result of generating the translation target text, the character translation device 100 may display the translated text in the second language in the second region 820, as shown in a screen 802. In other words, as a result of generating the translation target text and performing translation, the character translation device 100 may alter a subject displayed in the second region 820 in the screen 801 into that shown in the screen 802.

The character translation device 100 may identify the generated translation target text 815 among translation target areas and then display the same in the first region 810. Herein, the character translation device 100 may receive a request for modification of the identified sentence 815. Such modification request may be received from a user via touch gestures or button operation of the character translation device 100.

In response to the modification request, the character translation device 100 may generate modified translation target text. More particularly, when the user moves the identified part 815 or inputs a modification request to enlarge the identified part, the translation target text may be modified. Further, the character translation device 100 may move the identified part 815 or enlarge the same so as to display the enlarged part in the first region 810.

The character translation device 100 may translate the modified translation target text into the second language and then display a result of the translation in the second region 820.

FIG. 9 is an exemplary view for explaining how to modify the translation target text according to another embodiment of the present invention.

In step (S35), the character translation device 100 may generate a candidate sentence for the translation target text using the user event information, based on the extracted sentence in the first language. Referring to FIG. 9, the candidate sentence including the character combination shown in FIG. 7 may be generated.

In this regard, the character translation device 100 may predict a condition of the extracted sentence using the user event information 940, and then may generate candidate sentences 910 and 920 using the preset language model.

Further, the character translation device 100 may select a character combination to be included in the extracted sentence with the highest probability among at least one character combination generated in FIG. 7, and then may determine the sentence including the selected character combination as a final translation target text 950. More particularly, the character translation device 100 may acquire the data 900 from a preset language model 930 and select a character combination, which can be included in the extracted sentence with the highest probability, among character combinations by comparing words in the candidate sentences 910 and 920 with the character combinations. The language model 930 may comprise words, sentences containing the words, etc. Occasionally, a single sentence may consist of a word itself. Alternatively, a whole sentence may be idiom to thus match with the character combination.

On the other hand, in step (S11), the character translation device 100 may detect the user event information, based on the position information in the character translation device 100. That is, the character translation device may detect information about whether a user carrying the character translation device 100 is at the airport, out of the country, in a restaurant, etc. For this purpose, the character translation unit 100 may be further provided with a GPS module for detecting position information. Further, the character translation device 100 may detect communication information such as roaming information, as the user event information.

In step (S31), the character translation device 100 may automatically determine a first language, based on the user event information. That is, if the position information indicates China, the character translation device 100 may automatically determine Chinese as the first language. Further, in step (S41), the character translation device 100 may automatically determine a second language, based on the user event information. For instance, the character translation device 100 may use inherent identification information in the character translation device 100 as the user event information and thus automatically determine a language used by the user of the character translation device 100. Further, the character translation device 100 may also utilize details of the modification in position information as the user event information.

The character translation device 100 may detect that the character translation device 100 is in a restaurant, on the basis of the user event information. Therefore, with regard to generation of the translation target text, the character translation device may select a character combination related to a menu using the preset language model.

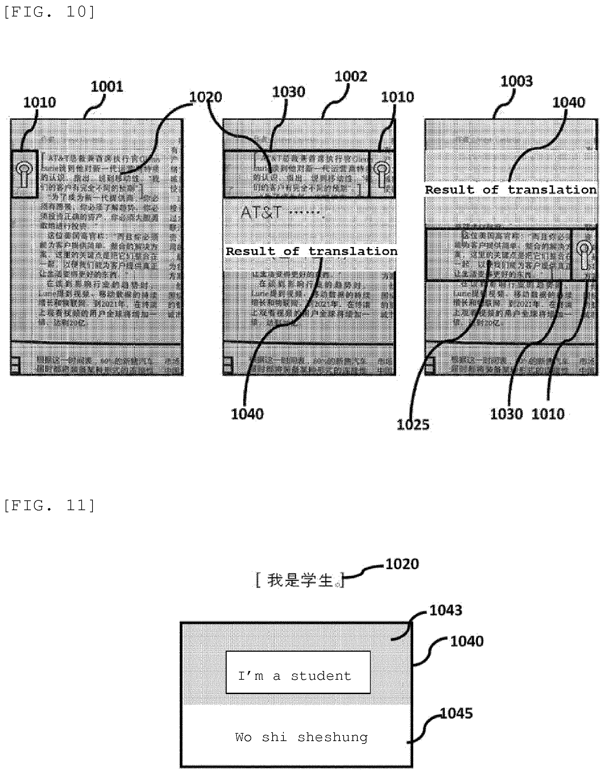

FIG. 10 illustrates an output UI of the character translation device referred to in some embodiments of the present invention.

Referring to FIG. 10, UI screens 1001, 1002 and 1003 displaying the texts translated by the character translation device 100 after selecting translation targets in step (S41) are illustrated by way of example.

Referring to the screen 1001, the character translation device 100 may display an identification indication for the translation target text 1020 generated in step (S35). The character translation device 100 may display an object 1010 designating a translation region.

Referring to the screen 1002, the character translation device 100 receives input of overlaying the object 1010 on an area 1030 including the translation target text 1020 by the user, and therefore, may select the translation target text 1020 in the overlaid area 1030 as a translation request sentence. The object 1010 may move while designating the area 1030 as a translation region by receiving the user input. For instance, upon receiving touch input and drag input to the object 1010 by the user, the character translation device 100 may control the object to move and extend in a drag input direction, and may recognize an area included while moving the object 1010 as a translation region. Further, the character translation device 100 may select the text included in the translation region as a translation request sentence.

The character translation device 100 may transmit the selected translation request sentence to the server and then receive a translation result thereof. Thereafter, the character translation device may display the translation result 1040 in a region adjacent to the translation region 1030.

Referring to the screen 1003, after receiving scroll input of the displayed image content, the character translation device 100 may move the translation region. Due to movement of the translation region, the translation target text 1025 included in the translation region 1030 may be changed. The charge translation device 100 may select the translation target text 1025 in the translation region 1030 as a translation request sentence.

Meanwhile, according to one embodiment of the present invention the character translation device 100 may scroll the image content in response to the scroll input to the object 1010.

FIG. 11 illustrates a transliteration output UI of the character translation device referred to in some embodiments of the present invention.

Referring to FIG. 11, when displaying the translation result 1040, the character translation device 100 may not only display the sentence in the second language 1043 as the translation result but also mark transliteration in the first language 1045 with the second language.

In other words, in step (S41), the character translation device 100 may identify the second language and, as shown in FIG. 11, if the first language is Chinese and the second language is Korean, the character translation device 100 may identify the above condition and display transliteration in the first language by the second language.

For instance, with respect to a sentence in the first language, " 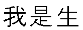 .", a translation result displayed in the second language is "I'm a student." Herein, the transliteration expressed by the second language with respect to the first language "Wo shi sheshung" may also be displayed.

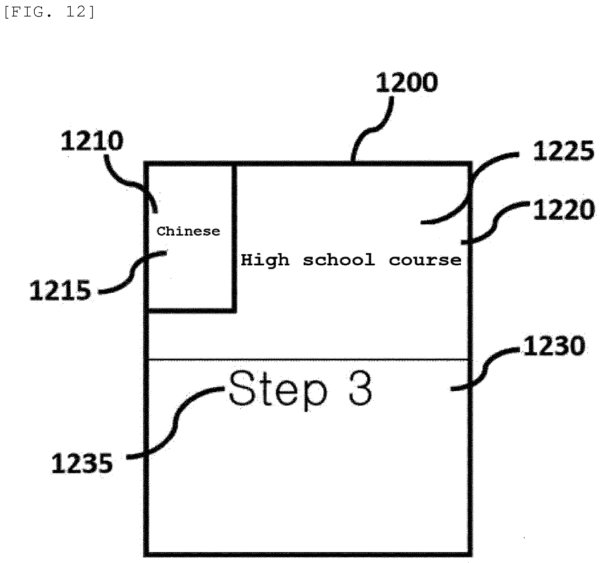

FIG. 12 is an exemplary view for explaining a translation target text determination method by layout identification, referred to in some embodiments of the present invention. Hereinbefore, a method for determining a translation target text by the character translation device 100 that detects a sentence determining symbol or a blank in a predetermined area in image content has been described. However, embodiments of the present invention are not particularly limited to the above. Instead, since character strings are distinguishable according to font and size of letters, as well as layout of the image content, that is, in individual areas of the image content, the character translation device 100 may judge character groups in respective areas as different sentences.

FIG. 12 illustrates the image content 1200 including a plurality of visibly distinct areas. In this case, the character translation device 100 may identify at least one of line, shade and color to partition the plural areas of the image content, and further identify the partitioned respective areas.

Further, the character translation device 100 may identify the character groups in the plural areas, respectively. Referring to FIG. 12, the image content 1200 including the areas 1210, 1220 and 1230, which include the character groups 1215, 1225 and 1235, respectively, is illustrated by way of example.

The character translation device 100 may judge the character groups 1215, 1225 and 1235 as different sentences, respectively, and generate translation target texts from these character groups.

In particular, even if there are character groups in different languages in the plural areas, respectively, the character translation device 100 may identify these languages via a detector.

The character translation device 100 may translate the generated texts and display the translated result to overlay the sentences in the respective areas.

The methods according to the embodiments of the present invention described with reference to the accompanying drawings may be performed by execution of a computer program implemented with computer readable code. The computer program may be transmitted from a first computing device to a second computing device via a network such as the Internet and then installed in the second computing device. Therefore, the computer program may be used in the second computing device. The first computing device and the second computing device may include both of a stationary computing device such as a server device, a desktop PC, etc. and a mobile computing device such as a laptop, a smartphone, a tablet PC, etc.

Hereinabove, although the embodiments of the present invention have been described with reference to the accompanying drawings, persons having ordinary skill in the art to which the present invention pertains could understand that the present invention may be implemented in other specific forms without changing the technical spirit or essential features. Therefore, the embodiments as described above should be understood to be illustrative in all respects without particularly limitation thereto.

### [Industrial Applicability]

The present invention relates to a character translation method and an apparatus for the same, and has industrial applicability.

## Claims

1. A character translation method performed by a character translation device, comprising:
acquiring image content;
recognizing characters and sentence determining symbols in a first language in the image content;
extracting a sentence in the first language, which consists of the recognized characters, based on the recognized sentence determining symbols;
generating a translation target text using user event information, based on the extracted sentence in the first language; and
translating the generated translation target text into a second language and displaying the translated sentence in the second language.

2. The method according to claim 1, wherein the step of acquiring image content includes receiving input of the user event information including language selection information from a user, and
the step of recognizing characters and sentence determining symbols in the first language includes:
recognizing the characters in the first language, based on the language selection information; and
recognizing the sentence determining symbols based on predefined language-specific sentence segmentation rules.

3. The method according to claim 2, wherein the step of recognizing the characters in the first language includes: recognizing at least one character string in the image content, and
the step of extracting a sentence in the first language, which consists of the recognized characters, includes:
identifying letter sizes of first character string and second character string among the recognized character strings; and
extracting the first character string as the sentence in the first language, based on the identified letter size.

4. The method according to claim 2, wherein the step of recognizing the characters in the first language includes recognizing at least one character string in the image content, and
the step of extracting a sentence in the first language, which consists of the recognized characters, includes:
selecting one of the recognized character strings, wherein the character contained in the selected character string is one located at the right end among characters of the recognized character strings;
executing first judgment about whether there is any character in the upper character string than the selected character string, with reference to x-axis coordinates of the character located at the right end; and,
as a result of the first judgment, if there is no character in the upper character string, extracting the selected character string as the sentence in the first language.

5. The method according to claim 4, wherein, as a result of the first judgment, if there is any character in the upper character string, extracting a plurality of character strings including the selected character string and the upper character string as the sentence in the first language.

6. The method according to claim 4, wherein the step of extracting the selected character string as the sentence in the first language includes:
executing second judgment about whether there is any character in the lower character string than the selected character string, with reference to the x-coordinate of the character located at the left end in the selected character string; and
as a result of the second judgment, if there is no character in the lower character string, extracting the selected character string as the sentence in the first language.

7. The method according to claim 6, further comprising, as a result of the second judgment, if there is any character in the lower character string, extracting a plurality of character strings including the selected character string and the lower character string as the sentence in the first language.

8. The method according to claim 2, wherein the step of recognizing the characters in the first language, based on the language selection information, includes:
determining candidate characters for a first character among the characters in the first language in the image content;
determining candidate characters for a second character adjacent to the first character among the characters in the first language in the image content;
generating at least one combination between the candidate characters for the first character and the candidate characters for the second character;
selecting the combination of characters to be recognized as the first character and the second character with the highest probability from the generated combinations, based on the language selection information; and
recognizing the characters in the first language, based on the selected character combination.

9. The method according to claim 8, wherein the generated character combinations include:
position information of the candidate characters for the first character and the candidate characters for the second character in the generated character combinations; and
information on a probability value that any of the candidate characters for the first character is recognized as the first character and a probability value that any of the candidate characters for the second character is recognized as the second character.

10. The method according to claim 8, wherein the step of generating the translation target text includes:
generating a candidate sentence for the translation target text using the user event information, based on the extracted sentence in the first language;
selecting a character combination to be included in the sentence with the highest probability among the generated character combinations, based on the generated candidate sentence; and
determining the sentence including the character combination to be included in the sentence with the highest probability as the translation target text.

11. The method according to claim 8, wherein the step of selecting the combination of characters to be recognized as the first character and the second character with the highest probability from the generated combinations, based on the language selection information, includes:
comparing the generated character combination with one or more sentences acquired from a preset language model or words contained in the sentences; and
as a result of the comparison, selecting the character combination to be matched with the acquired one or more sentences or words contained in the sentences with the highest probability as the character combinations to be recognized as the first character and the second character with the highest probability.

12. The method according to claim 1, wherein the step of acquiring image content including the characters in the first language includes receiving input of the user event information including information on types of the image content ('image content type information') by the user, and
the step of extracting a sentence in the first language, which consists of the recognized characters, includes extracting one-character string consisting of the recognized characters as the sentence in the first language, based on the image content type information.

13. The method according to claim 1, wherein the step of acquiring image content includes:
receiving input of a translation target area among the acquired images by the user; and
displaying the translation target area in a first region,
the step of recognizing characters and sentence determining symbols in the first language includes displaying the recognized characters and sentence determining symbols in the first language in a second region,
the step of displaying the translated sentence in the second language includes displaying the translated sentence in the second language in the second region after generating a translation target text.

14. The method according to claim 13, wherein the step of generating the translation target text includes identifying the generated translation target text in the translation target area and then displaying the same in the first region,
wherein the step of identifying the generated translation target text and then displaying the same in the first region includes:
receiving a request for modification of the identified text; and
generating a modified translation target text in response to the request for modification,
and wherein the step of displaying the translated sentence in the second language in the second region includes translating the modified translation target text into the second language and then displaying the same.

15. The method according to claim 1, wherein the step of generating the translation target text includes:
displaying a first region including at least one generated translation target text and displaying an object for setting a translation region;
after receiving user input to operate the object, displaying a second region, which is designated by the object according to the user input, and overlaying the same on the first region; and
translating the translation target text included in a part, at which the second region is overlaid with the first region, into the second language and then displaying the translated sentence in the second language.

16. The method according to claim 15, further comprising:
receiving scroll input of the image content by the user;
after scrolling the image content, changing at least one translation target text in the first region, overlaying the second region, which includes the changed translation target text, in the first region and displaying the same; and
translating the changed translation target text into the second language, and then displaying the translated sentence in the second language.

17. The method according to claim 1, wherein the step of acquiring image content includes detecting the user event information, based on position information in the character translation device,
the step of recognizing characters and sentence determining symbols in the first language includes automatically determining the first language, based on the user event information; and
the step of displaying the translated sentence in the second language includes automatically determining the second language, based on the user event information.

18. The method according to claim 1, wherein the sentence determining symbols are symbols capable of distinguishing a series of character groups from characters in a character string consisting of the recognized characters in the first language and then determining the distinguished character group as a sentence.

19. The method according to claim 1, wherein the step of recognizing characters and sentence determining symbols in the first language in the image content includes detecting a blank between plural character groups included in the character string consisting of the recognized characters in the first language, which is equal to or greater than a predetermined width of area, and
the step of extracting a sentence in the first language, which consists of the recognized characters, based on the recognized sentence determining symbols, includes recognizing the character groups before and after the detected blank as sentences different from each other, and then extracting the sentence in the first language.

20. A character translation device, comprising:
a camera for acquiring image content;
an input unit for receiving input of user event information,
a display unit for displaying a whole or part of the acquired image content; and
a control unit with functions of: recognizing characters and sentence determining symbols in a first language in the image content; extracting a sentence in the first language, which consists of the recognized characters, based on the recognized sentence determining symbols; generating a translation target text using the user event information, based on the extracted sentence in the first language; and translating the generated translation target text in a second language, thereby displaying the translated sentence in the second language.

21. A computer program stored in a recoding medium, which is used in conjunction with a computing device in order to execute the following processes including:
recognizing characters and sentence determining symbols in a first language in image content;
extracting a sentence in the first language, which consists of the recognized characters, based on the recognized sentence determining symbols;
generating a translation target text using user event information, based on the extracted sentence in the first language; and
translating the generated translation target text into a second language and displaying the translated sentence in the second language.
